# EUROPÄISCHE PATENTANMELDUNG

(11) **EP 3 269 504 A1**
(43) Veröffentlichungstag der Anmeldung: **17.01.2018**
(21) Anmeldenummer: 16179675.0
(22) Anmeldetag: 15.07.2016
(51) Int. Cl.: B24B 27/08, B24B 55/05, B24B 55/10, B25F 5/02

(54) **ABSAUGHAUBE FÜR WERKZEUGMASCHINE**

(71) Anmelder: HILTI Aktiengesellschaft, 9494 Schaan (LI)
(72) Erfinder: Ohlendorf, Oliver, 86899 Landsberg (DE)
(74) Vertreter: Hilti Aktiengesellschaft Corporate Intellectual Property

(57) **Zusammenfassung**

Absaughaube (1) für eine Werkzeugmaschine (2) mit einem rotierenden Werkzeug (10), insbesondere ein Schleif- oder Trennwerkzeug, zum Sammeln und Ableiten von bei der Verwendung der Werkzeugmaschine (2) erzeugtem Staub enthaltend,
- eine erste Seitenwand (11) mit einer ersten Aussparung (19),
- eine zweite Seitenwand (12) mit einer zweiten Aussparung (28), sowie
- ein mit der ersten und zweiten Seitenwand (11, 12) verbundener Absaugkanal (13), wobei der Durchmesser der ersten Aussparung (19) größer als der Durchmesser eines Flansches (7) der Werkzeugmaschine (2) ist, sodass die erste Aussparung (19) um den Flansch (7) positionierbar ist, und der Durchmesser der zweiten Aussparung (28) größer als der Durchmesser eines Spannelements (9) ist, welches zum lösbaren Befestigen des Werkzeugs (10) an einer Spindel (8) der Werkzeugmaschine (2) dient, sodass das Spannelement (9) in die zweite Aussparung (28) aufnehmbar ist und wobei die erste und zweite Seitenwand (11, 12) in einem Abstand (Z) zueinander positioniert sind, der kürzer als die Länge (L) der Spindel (8) ist.

## Beschreibung

Die vorliegende Erfindung betrifft eine Absaughaube für eine Werkzeugmaschine mit einem rotierenden Werkzeug, insbesondere ein Schleif- oder Trennwerkzeug, zum Sammeln und Ableiten von bei der Verwendung der Werkzeugmaschine erzeugtem Staub enthaltend, eine erste Seitenwand mit einer ersten Aussparung, eine zweite Seitenwand mit einer zweiten Aussparung, sowie ein mit der ersten und zweiten Seitenwand verbundener Absaugkanal. Bei dem rotierenden Werkzeug kann es sich beispielsweise eine Trennscheibe oder Schleifscheibe handeln.

Schleif- oder Trennwerkzeug, wie beispielsweise Winkelschleifer, benötigen bei ihrer Verwendung für gewöhnlich eine Absaughaube, um Staub, der bei der Verwendung bzw. beim Arbeiten mit dem Schleif- oder Trennwerkzeug entsteht, einzusammeln und von dem Werkzeug (Schleif- oder Trennscheibe) bzw. von der Arbeitsstelle wegzuleiten. Die Absaughaube kann auch als Staubhaube oder Schutzhaube bezeichnet werden.

Bei den auf dem Markt befindlichen Staubhauben bzw. bei den Staubhauben gemäß dem Stand der Technik besteht jedoch häufig ein Problem sowohl bei der Anbringung der Staubhaube an der Werkzeugmaschine als auch bei dem Lösen der Staubhaube von der Werkzeugmaschine. Die Anbringung sowie das Lösen können kompliziert und aufwendig für den Anwender der Werkzeugmaschine sein.

Des Weiteren kann das Auswechseln des Werkzeugs, d.h. der Schleif- oder Trennscheibe, bei einer Werkzeugmaschine mit montierter Staubhaube ein Problem darstellen. Der Werkzeugwechsel, d.h. das Lösen des Werkzeugs von einer Spindel der Werkzeugmaschine sowie das erneute Anbringen des Werkzeugs an der Spindel, kann dabei ebenfalls kompliziert und aufwendig für den Anwender der Werkzeugmaschine sein.

Darüber hinaus steht sich dem Anwender der Werkzeugmaschine stets die oftmals aufwendige Aufgabe zu überprüfen, ob die Staubhaube und/oder das Werkzeug ordnungsgemäß an der Werkzeugmaschine befestigt sind.

Aufgabe der vorliegenden Erfindung ist es daher, die vorstehend genannten Probleme bzw. Aufgaben zu lösen und insbesondere eine verbesserte Absaughaube für eine Werkzeugmaschine mit einem rotierenden Werkzeug, insbesondere ein Schleif- oder Trennwerkzeug, bereitzustellen, mit der die Anbringung der Staubhaube an der Werkzeugmaschine und das Lösen der Staubhaube von der Werkzeugmaschine sowie das Auswechseln eines Werkzeugs, z.B. Schleif- oder Trennscheibe, erleichtert wird.

Die Aufgabe wird gelöst durch den Gegenstand des unabhängigen Anspruchs 1. Vorteilhafte Ausführungsformen des erfindungsgemäßen Gegenstands sind in den abhängigen Ansprüchen enthalten.

Die Aufgabe wird dabei gelöst durch das Bereitstellen einer Absaughaube für eine Werkzeugmaschine mit einem rotierenden Werkzeug, insbesondere ein Schleif- oder Trennwerkzeug, zum Sammeln und Ableiten von bei der Verwendung der Werkzeugmaschine erzeugtem Staub enthaltend, eine erste Seitenwand mit einer ersten Aussparung, eine zweite Seitenwand mit einer zweiten Aussparung, sowie ein mit der ersten und zweiten Seitenwand verbundener Absaugkanal.

Erfindungsgemäß ist vorgesehen, dass der Durchmesser der ersten Aussparung größer als der Durchmesser eines Flansches der Werkzeugmaschine ist, sodass die erste Aussparung um den Flansch positionierbar ist, und der Durchmesser der zweiten Aussparung größer als der Durchmesser eines Spannelements ist, welches zum lösbaren Befestigen des Werkzeugs an einer Spindel der Werkzeugmaschine dient, sodass das Spannelement in die zweite Aussparung aufnehmbar ist und wobei die erste und zweite Seitenwand in einem Abstand zueinander positioniert sind, der kürzer als die Länge der Spindel ist. Hierdurch kann das Spannelement, beispielsweise eine Spannmutter, von ausserhalb der Staubhaube an die Spindel der Werkzeugmaschine befestigt (z.B. geschraubt) werden, wenn sich das Werkzeug (z.B. Schleif- oder Trennscheibe) bereits in der Staubhaube befindet. Die Staubhaube kann somit komplett mit dem in der Staubhaube befindlichen Werkzeug einfach und schnell sowohl von der Werkzeugmaschine befestigt als auch an die Werkzeugmaschine montiert werden.

Gemäß einer vorteilhaften Ausführungsform der vorliegenden Erfindung kann es möglich sein, dass der Abstand der ersten und zweiten Seitenwand im Wesentlichen der Breite des Werkzeugs entspricht. Hierdurch wird die Anbringung des Spannelements an der Spindel der Werkzeugmaschine zusätzlich erleichtert, wenn die Staubhaube mit dem in der Staubhaube befindlichen Werkzeug an der Werkzeugmaschine positioniert ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: eine perspektivische Ansicht einer erfindungsgemäßen Absaughaube mit einer angedeuteten Werkzeugmaschine in Form eines Winkelschleifers und ein Werkzeug in Form einer Trennscheibe in einem demontierten Zustand;
- Fig. 2: eine weitere perspektivische Ansicht der Absaughaube zusammen mit dem Winkelschleifer und der Trennscheibe in einem demontierten Zustand;
- Fig. 3: eine weitere perspektivische Ansicht der Absaughaube, wobei die Trennscheibe in der Absaughaube und die Absaughaube entgegen der Pfeilrichtung R über dem Winkelschleifer positioniert ist;
- Fig. 4: eine weitere perspektivische Ansicht der Absaughaube, wobei die Trennscheibe in der Absaughaube und die Absaughaube an dem Winkelschleifer positioniert ist; und
- Fig. 5: eine weitere perspektivische Ansicht der Absaughaube in einem montierten Zustand.

### Ausführungsbeispiele:

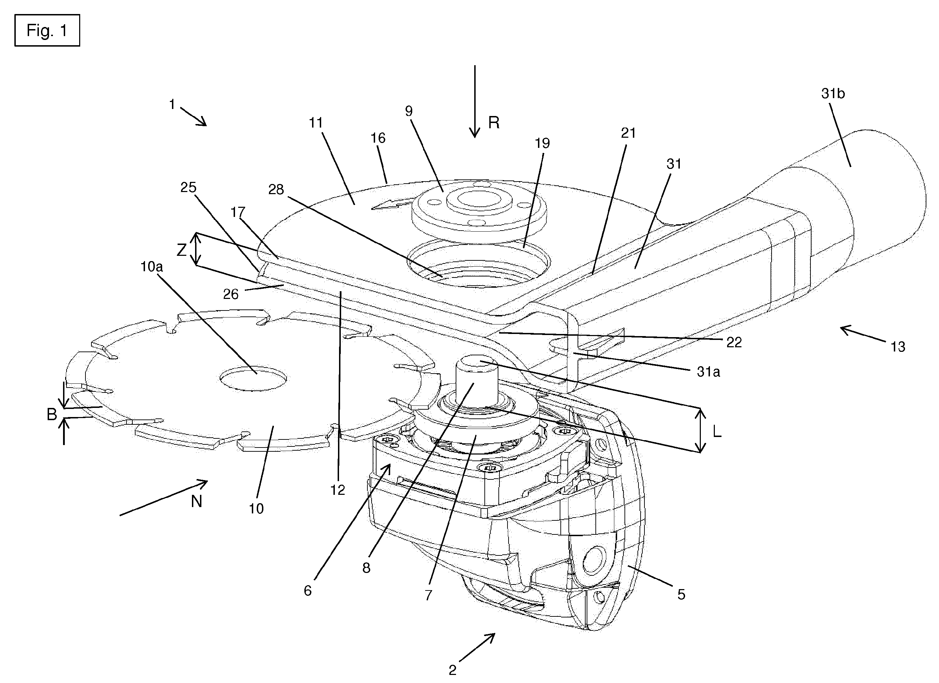

Fig. 1 zeigt eine erfindungsgemäße Absaughaube 1 für eine Werkzeugmaschine 2 in einem von der Werkzeugmaschine 2 demontierten Zustand. Die Absaughaube 1 kann auch als Staubhaube oder Schutzhaube bezeichnet werden.

Bei der Werkzeugmaschine 2 handelt es sich um einen Winkelschleifer. In den Figuren ist lediglich ein Kopf 5 des Winkelschleifers mit einer Werkzeugaufnahme 6 sichtbar.

Die Werkzeugaufnahme 6 enthält dabei eine Spindel 8 zur Befestigung eines Werkzeugs 10, beispielsweise eine Schleif- oder Trennscheibe sowie zur Übertragung eines Drehmoments auf das Werkzeug 10. Die Spindel 8 weist eine Länge L auf.

Das Werkzeug 10 enthält eine zentrale Durchbohrung 10a und kann an dieser mittels eines Spannelements 9 an der Spindel 8 befestigt werden. Das Werkzeug 10 weist eine Breite B auf. Das Spannelement 9 ist in den Figuren als Spannmutter dargestellt und kann auf die Spindel 8 geschraubt werden. Die Spindel 8 ist mittels eines Flansches 7 an dem Kopf 5 der Werkzeugmaschine 2 drehbar verbunden. Der Flansch 7 ist dabei in Pfeilrichtung R unterhalb der Spindel 8 an dem Kopf 5 der Werkzeugmaschine 2 positioniert.

Die Staubhaube 1 enthält im Wesentlichen eine erste Seitenwand 11, eine zweite Seitenwand 12 und einen Absaugkanal 13.

Die erste Seitenwand 11 enthält im Wesentlichen eine erste gebogene Seitenkante 16, eine erste gerade Seitenkante 21, eine erste Bodenkante 17 und eine erste Aussparung 19.

Die zweite Seitenwand 12 enthält im Wesentlichen eine zweite gebogene Seitenkante 25, eine zweite gerade Seitenkante 22, eine zweite Bodenkante 26 und eine zweite Aussparung 28. Die erste und zweite Seitenkante 11, 12 sind über eine Begrenzungswand 27 miteinander verbunden und weisen einen Abstand Z zueinander auf. Der Abstand Z wird dabei von einem Punkt an der ersten Seitenwand 11 zu einem entsprechenden Punkt an der zweiten Seitenwand 12 gemessen. Der Abstand kann von der Aussenoberfläche der ersten Seitenwand 11 zu der Aussenoberfläche der zweiten Seitenwand 12 gemessen werden. Die Begrenzungswand 27 verläuft entlang der ersten und zweiten gebogenen Seitenkante 16, 25. Die erste und zweite Bodenkante 17, 26 dient dazu die Absaughaube 1 an einem zu bearbeitenden Werkstück entlang zu führen. Das Werkstück ist in den Figuren nicht dargestellt.

Die erste Aussparung 19 der ersten Seitenwand 11 ist größer als der Durchmesser des Flansches 7 der Werkzeugmaschine 2, sodass die erste Aussparung 19 um den Flansch 7 herum positioniert werden kann. Der Durchmesser der ersten Aussparung 19 und der Durchmesser des Flansches 7 sind dabei so dimensioniert, dass die erste Aussparung 19 passgenau an dem Flansch 7 angelegt werden kann. Die zweite Aussparung 28 der zweiten Seitenwand 12 ist größer als der Durchmesser des als Spannmutter ausgestalteten Spannelements 9, sodass die Spannmutter 9 in die zweite Aussparung 28 aufgenommen werden kann. Es ist dabei auch möglich, dass der Durchmesser der ersten Aussparung 19 nur ein wenig größer als der Durchmesser des Flansches 7 ist, damit die erste Aussparung 19 möglichst eng um den Flansch 7 anliegt. Der Durchmesser der zweiten Aussparung 28 und der Durchmesser der Spannmutter 9 sind dabei so dimensioniert, dass die Spannmutter 9 passgenau an die zweite Aussparung 28 angelegt werden kann. Es ist dabei auch möglich, dass der Durchmesser der zweiten Aussparung 28 nur ein wenig größer als der Durchmesser der Spannmutter 9 ist, damit die zweite Aussparung 28 möglichst eng um der Spannmutter 9 anliegt.

Der Absaugkanal 13 enthält im Wesentlichen einen zylindrischen Schacht 31 mit einem ersten Ende 31 a und einem zweiten Ende 31 b. Das erste Ende 31 a bildet mit der ersten und zweiten Bodenkante 17, 26 eine gemeinsame Ebene. An dem zweiten Ende 31b kann ein Schlauch befestigt werden, der wiederum mit einem Staubsauger verbunden ist. Weder der Schlauch noch der Staubsauger sind in den Figuren dargestellt. Die erste gerade Seitenkante 21 der ersten Seitenwand 11 und die zweite gerade Seitenkante 22 der zweiten Seitenwand 12 sind mit dem Schacht 31 des Absaugkanals 13 verbunden, sodass ein Hohlraum zwischen der ersten und zweiten Seitenwand 11, 12 mit einem Hohlraum im Inneren des Absaugkanals 13 verbunden ist. Durch die Verbindung der Hohlräume kann Staub, welcher bei der Bearbeitung eines Werkstücks durch das Werkzeug 10 entsteht, durch die beiden Seitenwände 11, 12 und in den Schacht 31 des Absaugkanals 13 geleitet werden, wenn ein Staubsauger mit der Absaughaube 1 verbunden ist.

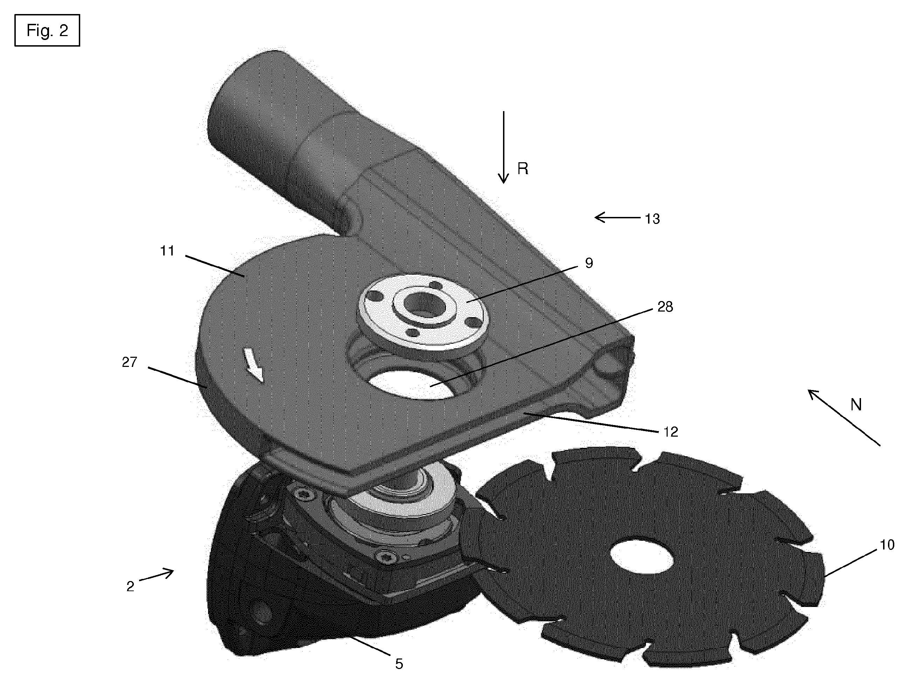

In den Figuren 2 bis 5 wird die Montage des Werkzeugs 10 in Form einer Trennscheibe an der Werkzeugmaschine 2 in Form eines Winkelschleifers mit erfindungsgemäßer Absaughaube 1 dargestellt.

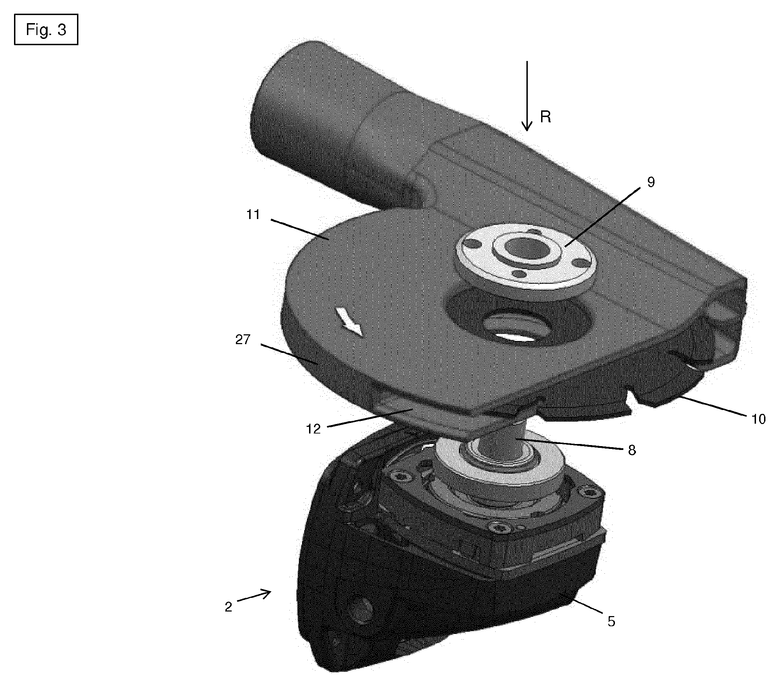

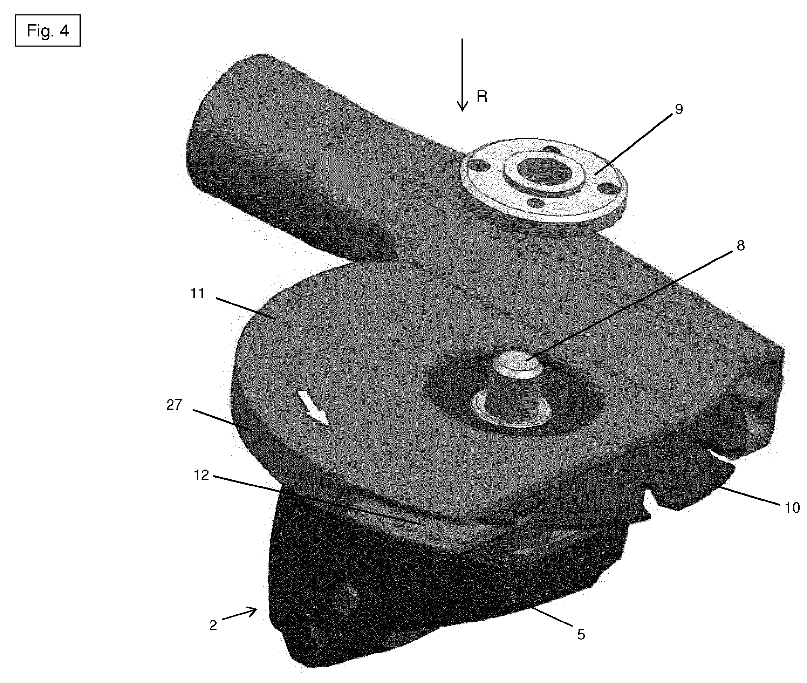

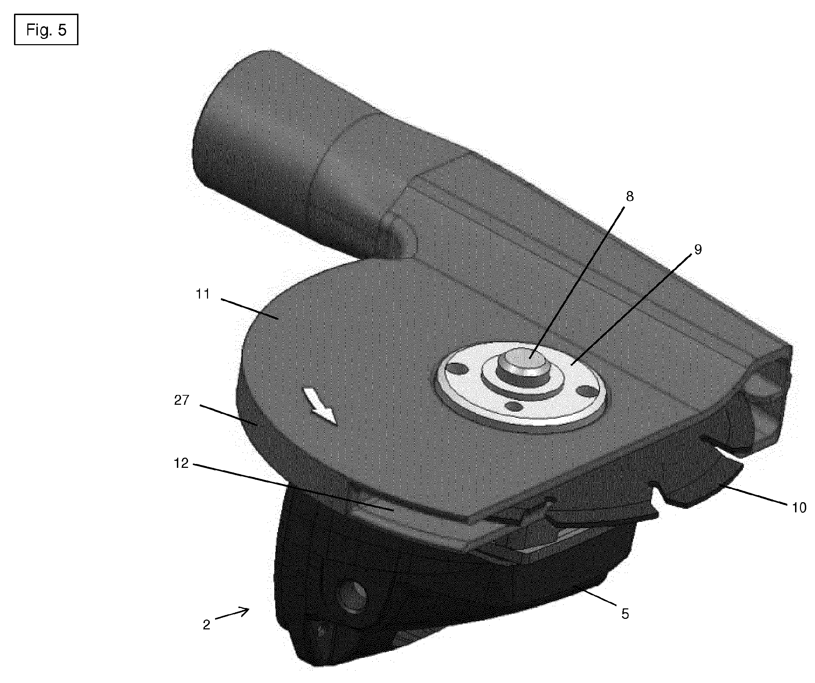

Wie in Figur 2 beschrieben ist die Absaughaube 1 von dem Winkelschleifer 2 losgelöst. Das als Spannmutter dargestellte Spannelement 9 ist von der Spindel 8 losgelöst. Die Trennscheibe 10 wird in Pfeilrichtung N in den Hohlraum zwischen der ersten und zweiten Seitenwand 11, 12 geschoben. Wie in Figur gezeigt wird die Trennscheibe 10 soweit in den Hohlraum geschoben bis die Durchbohrung 10a des als Trennscheibe ausgestalteten Werkzeugs 10 mit der ersten Aussparung 19 der ersten Seitenwand 11 und der zweiten Aussparung 28 der zweiten Seitenwand 12 fluchtet (vgl. Fig. 3). Anschließend wird die Absaughaube 1 mit der Trennscheibe 10 auf die Spindel 8 des Winkelschleifers 10 positioniert. Die Aufgrund des geringen Abstands Z der beiden Seitenwände 11, 12 zueinander ragt die Spindel 8 durch die Absaughaube 1 hindurch. Die Spannmutter 9 wird in Pfeilrichtung R auf die Spindel 8 befestigt (vgl. Fig. 4). Durch das Befestigen der Spannmutter 9 auf der Spindel 8 werden das Werkzeug 10 und die Absaughaube 1 mit dem Kopf 5 der Werkzeugmaschine 2 verbunden (vgl. Fig. 5).

## Patentansprüche

1. Absaughaube (1) für eine Werkzeugmaschine (2) mit einem rotierenden Werkzeug (10), insbesondere ein Schleif- oder Trennwerkzeug, zum Sammeln und Ableiten von bei der Verwendung der Werkzeugmaschine (2) erzeugtem Staub enthaltend,
- eine erste Seitenwand (11) mit einer ersten Aussparung (19),
- eine zweite Seitenwand (12) mit einer zweiten Aussparung (28), sowie
- ein mit der ersten und zweiten Seitenwand (11, 12) verbundener Absaugkanal (13),
**dadurch gekennzeichnet, dass** der Durchmesser der ersten Aussparung (19) größer als der Durchmesser eines Flansches (7) der Werkzeugmaschine (2) ist, sodass die erste Aussparung (19) um den Flansch (7) positionierbar ist, und der Durchmesser der zweiten Aussparung (28) größer als der Durchmesser eines Spannelements (9) ist, welches zum lösbaren Befestigen des Werkzeugs (10) an einer Spindel (8) der Werkzeugmaschine (2) dient, sodass das Spannelement (9) in die zweite Aussparung (28) aufnehmbar ist und wobei die erste und zweite Seitenwand (11, 12) in einem Abstand (Z) zueinander positioniert sind, der kürzer als die Länge (L) der Spindel (8) ist.

2. Absaughaube (1) nach Anspruch 1,
**dadurch gekennzeichnet, dass** der Abstand (Z) im Wesentlichen der Breite (B) des Werkzeugs (10) entspricht.
